# EUROPEAN PATENT APPLICATION

(11) **EP 4 821 744 A1**
(43) Date of publication of application: **14.10.2026**
(21) Application number: 26170204.7
(22) Date of filing: 01.04.2026
(51) Int. Cl.: B60L 53/16, B60L 3/00, B60L 3/04, B60L 3/12, B60L 53/18, B60L 53/30, B60L 53/31, B60L 53/65, B60L 53/66, H01R 13/05, H01R 13/11, H01R 13/52, H01R 13/66, H01R 13/502, H01R 13/506, H01R 13/518, H01R 13/629, H01R 13/641, H01R 31/06, H02J 7/40, H02J 7/60, H01R 103/00, H02J 105/37

(54) **CHARGING DOCK AND CHARGING DEVICE**

(30) Priority: 07.04.2025 CN 202510428533
(71) Applicant: Tyco Electronics (Shanghai) Co., Ltd., Pilot Free Trade Zone Shanghai 200131 (CN); Tyco Electronics Technology (SIP) Ltd., Suzhou 215026 (CN)
(72) Inventor: Zhu, Fangyue, Shanghai, 200233 (CN); Xia, Leilei, Shanghai, 200233 (CN); Wang, Jimmy, Shanghai, 200233 (CN)
(74) Representative: Grünecker Patent- und Rechtsanwälte PartG mbB

(57) **Abstract**

The present invention discloses a charging dock and charging device. The charging dock comprises: an insulation housing (13); a power terminal (12) which is provided in the insulation housing (13) for mating with a mating power terminal (42) of a charging gun (4); a signal terminal (11) which is provided in the insulation housing (13) for mating with a mating signal terminal (41) of the charging gun (4); and a circuit board which is provided in the insulation housing (13) and electrically connected to the signal terminal (11). The circuit board has a first wireless communication module (10) for wireless communication with a second wireless communication module (20) of a charger (2). After the charging dock (1) is docked with the charging gun (4), the first wireless communication module (10) sends a docking completion message to the second wireless communication module (20). In the present invention, wireless communication is established between the charging dock and the charger, eliminating the need for existing physical signal cables. This not only simplifies the signal circuit and assembly process, but also reduces the space occupied by the charging device and lowers the difficulty of wiring.

## Description

### CROSS-REFERENCE TO RELATED APPLICATION

This application claims the benefit of Chinese Patent Application No. CN202510428533.8 filed on April 7, 2025 in the State Intellectual Property Office of China, the whole disclosure of which is incorporated herein by reference.

### BACKGROUND OF THE INVENTION

### Field of the Invention

The present invention relates to a charging dock and a charging device comprising the same, particularly to a charging dock and charging device for a new energy electric vehicle.

### Description of the Related Art

In the prior art, a charging device is installed on a new energy electric vehicle. The charging device usually includes a charging dock and a charger. The charging dock is used to mate with a charging gun. The charger is used to charge the rechargeable battery of the vehicle. There are multiple power cables for transmitting charging current and multiple signal cables for transmitting signals between the charging dock and the charger. Usually, there are 6-10 signal cables connected between the charging dock and the charger, which not only makes the signal circuit complex and the assembly process cumbersome, but also occupies a large amount of vehicle space, increasing the difficulty of vehicle wiring.

### SUMMARY OF THE INVENTION

The present invention has been made to overcome or alleviate at least one aspect of the above mentioned disadvantages.

According to an aspect of the present invention, there is provided a charging dock. The charging dock comprises: an insulation housing; a power terminal which is provided in the insulation housing for mating with a mating power terminal of a charging gun; a signal terminal which is provided in the insulation housing for mating with a mating signal terminal of the charging gun; and a circuit board which is provided in the insulation housing and electrically connected to the signal terminal. The circuit board has a first wireless communication module for wireless communication with a second wireless communication module of a charger. After the charging dock is docked with the charging gun, the first wireless communication module sends a docking completion message to the second wireless communication module.

According to an exemplary embodiment of the present invention, the charging dock further comprises a power cable which is electrically connected to the rear end of the power terminal and led out from the insulation housing for electrical connection to the charger, the power cable is used to transmit charging current between the charging dock and the charger.

According to another exemplary embodiment of the present invention, the charging dock further comprises a grounding terminal which is provided in the insulation housing for mating with a mating grounding terminal of the charging gun.

According to another exemplary embodiment of the present invention, the charging dock further comprises a grounding cable which is electrically connected to the rear end of the grounding terminal and led out from the insulation housing for electrical connection to the charger.

According to another exemplary embodiment of the present invention, the insulation housing comprises a main housing and a rear end cover installed on the rear end of the main housing, and the power cable and the grounding cable are led out from the rear end cover.

According to another exemplary embodiment of the present invention, the rear end of the power terminal is welded or crimped onto the power cable; and/or the rear end of the grounding terminal is welded or crimped to the grounding cable.

According to another exemplary embodiment of the present invention, the rear end of the power terminal extends from the insulation housing for electrical connection to a power cable.

According to another exemplary embodiment of the present invention, the charging dock further comprises a power cable electrically connected to the rear end of the power terminal, the power cable is used to electrically connect the power terminal of the charging dock to the charger to transmit charging current between the charging dock and the charger.

According to another exemplary embodiment of the present invention, the charging dock further comprises a grounding terminal which is provided in the insulation housing for mating with a mating grounding terminal of the charging gun, the rear end of the grounding terminal extends from the insulation housing for electrical connection to a grounding cable.

According to another exemplary embodiment of the present invention, the charging dock further comprises a grounding cable electrically connected to the rear end of the grounding terminal, the grounding cable is used to electrically connect the grounding terminal of the charging dock to the charger.

According to another exemplary embodiment of the present invention, the insulation housing comprises a main housing and a rear end cover installed on the rear end of the main housing, and the power terminal and the grounding terminal extend from the rear end cover.

According to another exemplary embodiment of the present invention, a threaded hole suitable for connecting with a bolt is formed in the rear end of the power terminal, so that the power terminal can be fastened to one end of the power cable through a bolt; and/or a threaded hole suitable for connecting with a bolt is formed in the rear end of the grounding terminal, so that the grounding terminal can be fastened to one end of the grounding cable through a bolt.

According to another exemplary embodiment of the present invention, a first through-hole allowing the power terminal to pass through and a second through-hole allowing the ground terminal to pass through are formed in the circuit board.

According to another aspect of the present invention, there is provided a charging device. The charging device comprises: the above charging dock suitable for docking with a charging gun; and a charger for charging a rechargeable battery and comprising a second wireless communication module adapted for wireless communication with the first wireless communication module. The power terminal of the charging dock is electrically connected to the charger via a power cable, which is used to transmit charging current between the charging dock and the charger. After the charging dock is docked with the charging gun, the first wireless communication module sends a docking completion message to the second wireless communication module, and the charger connects a charging circuit between the charger and the rechargeable battery after receiving the docking completion message, so as to charge the rechargeable battery.

According to an exemplary embodiment of the present invention, during the process of docking the charging gun with the charging dock, the signal terminal is docked with the mating signal terminal after the power terminal is docked with the mating power terminal, in order to connect the charging circuit between the charger and the rechargeable battery after the power terminal is docked with the mating power terminal.

According to another exemplary embodiment of the present invention, when the signal terminal is not docked with the mating signal terminal, the first wireless communication module determines that the charging gun is not docked with the charging dock and sends an incomplete docking message to the second wireless communication module; when the charger receives the incomplete docking message, the charger cuts off the charging circuit between the charger and the rechargeable battery or keeps the charging circuit in a disconnected state.

According to another exemplary embodiment of the present invention, during the process of pulling out the charging gun from the charging dock, the signal terminal is separated from the mating signal terminal before the power terminal is separated from the mating power terminal, in order to cut off the charging circuit between the charger and the rechargeable battery before the power terminal is separated from the mating power terminal.

According to another exemplary embodiment of the present invention, the charging dock comprises multiple power terminals, which are respectively electrically connected to the charger via multiple power cables.

According to another exemplary embodiment of the present invention, the charging device is a vehicle mounted charging device used for charging a vehicle mounted rechargeable battery.

According to another exemplary embodiment of the present invention, the first wireless communication module and the second wireless communication module are Bluetooth modules, Wi-Fi modules, Zigbee modules, or RFID modules.

According to another exemplary embodiment of the present invention, there is no physical signal connection cable between the charging dock and the charger, and all signal transmission between the charging dock and the charger is achieved through wireless communication between the first wireless communication module and the second wireless communication module.

According to another aspect of the present invention, there is provided a charging device. The charging device comprises: a charging dock adapted to dock with a charging gun and comprising a first wireless communication module adapted to detect whether the charging dock has docked with the charging gun; a charger for charging a rechargeable battery and comprising a second wireless communication module adapted for wireless communication with the first wireless communication module; and a power cable which is connected between the charging dock and the charger for transmitting charging current between the charging dock and the charger. After the charging dock is docked with the charging gun, the first wireless communication module sends a docking completion message to the second wireless communication module, and the charger connects a charging circuit between the charger and the rechargeable battery after receiving the docking completion message, so as to charge the rechargeable battery.

In the aforementioned exemplary embodiments according to the present invention, wireless communication between the charging dock and the charger eliminates the existing physical form of signal cables, which not only simplifies the signal circuit and assembly process, but also reduces the occupied space of the charging device and lowers the difficulty of wiring.

### BRIEF DESCRIPTION OF THE DRAWINGS

The above and other features of the present invention will become more apparent by describing in detail exemplary embodiments thereof with reference to the accompanying drawings, in which:
Figure 1 shows an illustrative view of a charging device according to an exemplary embodiment of the present invention, where the charging gun has not yet been docked with the charging dock;
Figure 2 shows an illustrative view of a charging device according to an exemplary embodiment of the present invention, in which the charging gun is inserted into the charging dock but the two have not yet completed docking;
Figure 3 shows an illustrative view of a charging device according to an exemplary embodiment of the present invention, in which the charging gun and charging dock have been docked;
Figure 4 shows an illustrative perspective view of a charging dock according to an exemplary embodiment of the present invention when viewed from the front side;
Figure 5 shows an illustrative exploded view of a charging dock according to an exemplary embodiment of the present invention when viewed from the front side;
Figure 6 shows an illustrative perspective view of a charging dock according to an exemplary embodiment of the present invention when viewed from the rear side;
Figure 7 shows an illustrative exploded view of a charging dock according to an exemplary embodiment of the present invention when viewed from the rear; and
Figure 8 shows an illustrative perspective view of a charging dock according to another exemplary embodiment of the present invention when viewed from the rear.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a charging dock. The charging dock comprises: an insulation housing; a power terminal which is provided in the insulation housing for mating with a mating power terminal of a charging gun; a signal terminal which is provided in the insulation housing for mating with a mating signal terminal of the charging gun; and a circuit board which is provided in the insulation housing and electrically connected to the signal terminal. The circuit board has a first wireless communication module for wireless communication with a second wireless communication module of a charger. After the charging dock is docked with the charging gun, the first wireless communication module sends a docking completion message to the second wireless communication module.

According to another general concept of the present invention, there is provided a charging device. The charging device comprises: the above charging dock suitable for docking with a charging gun; and a charger for charging a rechargeable battery and comprising a second wireless communication module adapted for wireless communication with the first wireless communication module. The power terminal of the charging dock is electrically connected to the charger via a power cable, which is used to transmit charging current between the charging dock and the charger. After the charging dock is docked with the charging gun, the first wireless communication module sends a docking completion message to the second wireless communication module, and the charger connects a charging circuit between the charger and the rechargeable battery after receiving the docking completion message, so as to charge the rechargeable battery.

According to another general concept of the present invention, there is provided a charging device. The charging device comprises: a charging dock adapted to dock with a charging gun and comprising a first wireless communication module adapted to detect whether the charging dock has docked with the charging gun; a charger for charging a rechargeable battery and comprising a second wireless communication module adapted for wireless communication with the first wireless communication module; and a power cable which is connected between the charging dock and the charger for transmitting charging current between the charging dock and the charger. After the charging dock is docked with the charging gun, the first wireless communication module sends a docking completion message to the second wireless communication module, and the charger connects a charging circuit between the charger and the rechargeable battery after receiving the docking completion message, so as to charge the rechargeable battery.

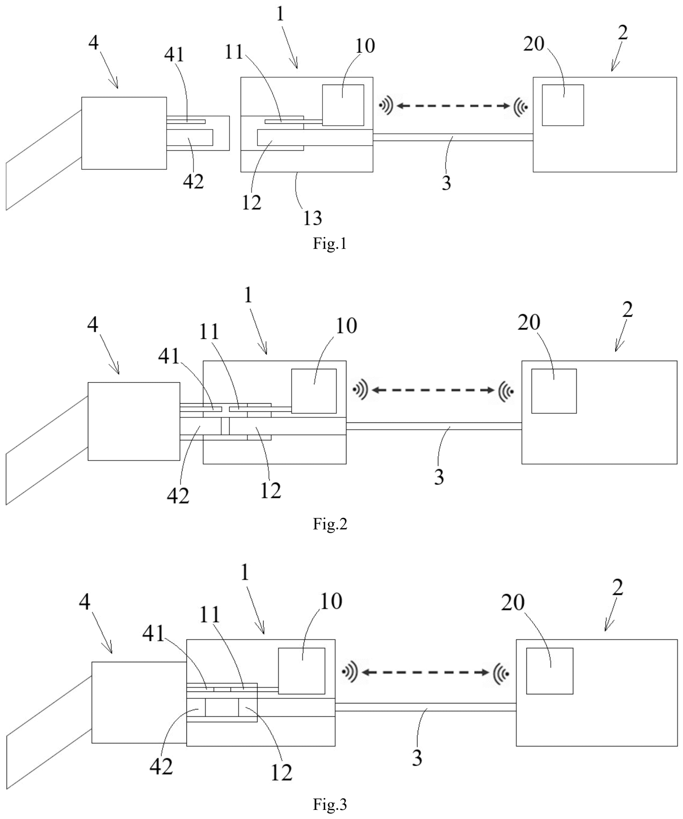

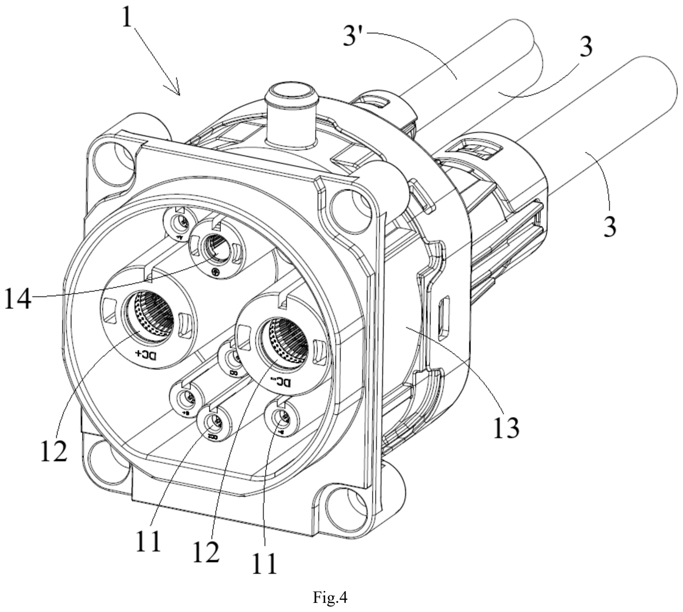

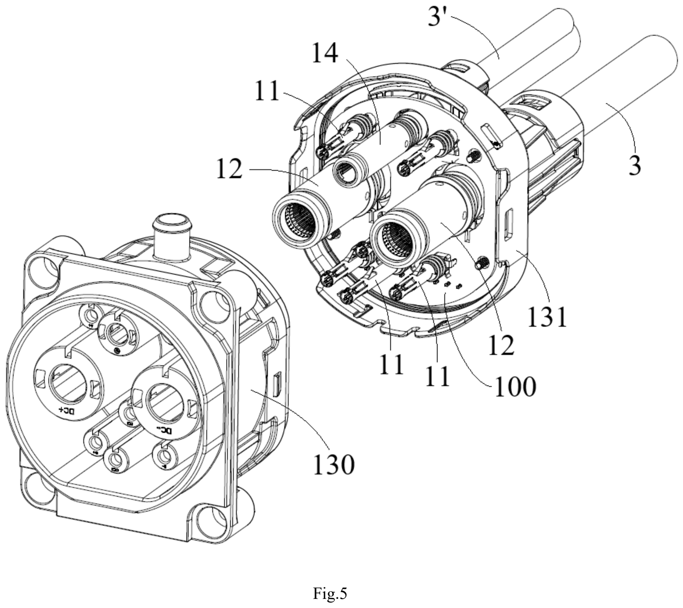

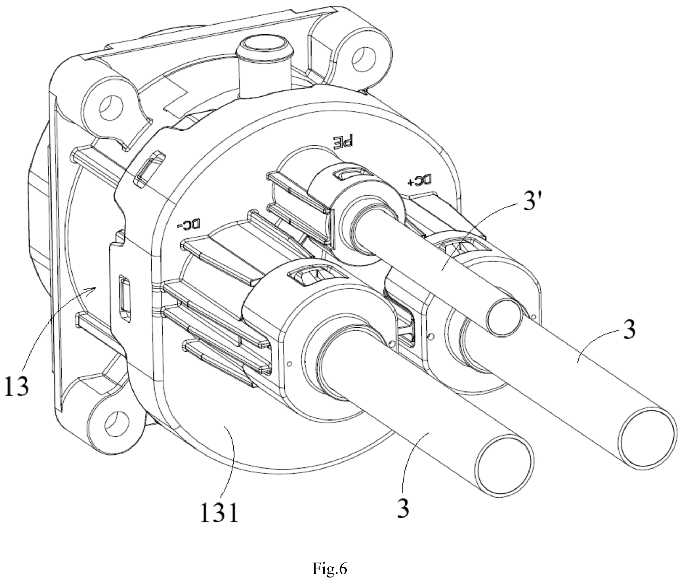

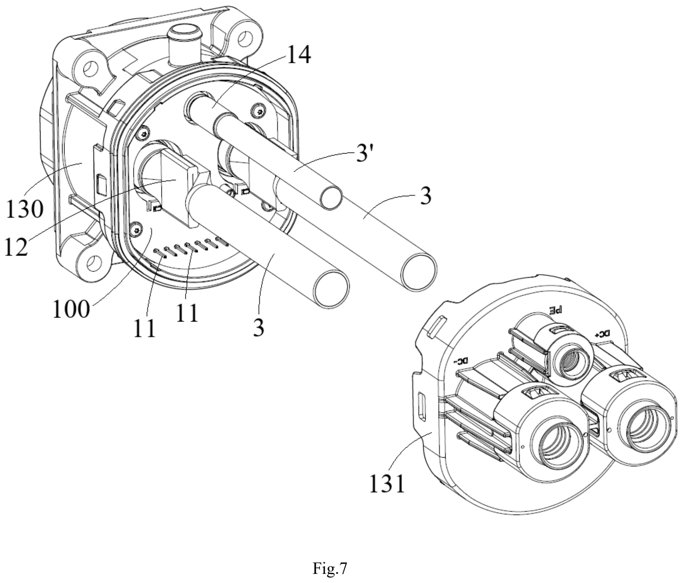

Figure 1 shows an illustrative view of a charging device according to an exemplary embodiment of the present invention, where the charging gun 4 has not yet been docked with the charging dock 1; Figure 2 shows an illustrative view of a charging device according to an exemplary embodiment of the present invention, in which the charging gun 4 is inserted into the charging dock 1 but the two have not yet completed docking; Figure 3 shows an illustrative view of a charging device according to an exemplary embodiment of the present invention, in which the charging gun 4 and the charging dock 1 have completed docking; Figure 4 shows an illustrative perspective view of a charging dock according to an exemplary embodiment of the present invention when viewed from the front side; Figure 5 shows an illustrative exploded view of a charging dock according to an exemplary embodiment of the present invention when viewed from the front side; Figure 6 shows an illustrative perspective view of a charging dock according to an exemplary embodiment of the present invention when viewed from the rear side; Figure 7 shows an illustrative exploded view of a charging dock according to an exemplary embodiment of the present invention when viewed from the rear.

As shown in Figures 1 to 7, in an exemplary embodiment of the present invention, a charging dock 1 is disclosed. The charging dock 1 includes: an insulation housing 13, a power terminal 12, a signal terminal 11, and a circuit board 100. The power terminal 12 is set in the insulation housing 13 for mating with a mating power terminal 42 of a charging gun 4. The signal terminal 11 is set in the insulation housing 13 for mating with a mating signal terminal 41 of the charging gun 4. The circuit board 100 is provided in the insulation housing 13 and electrically connected to the signal terminal 11. The circuit board 100 has a first wireless communication module 10 for wireless communication with a second wireless communication module 20 of a charger 2. After the charging dock 1 is docked with the charging gun 4, the first wireless communication module 10 sends a docking completion message to the second wireless communication module 20.

As shown in Figures 1 to 7, in the illustrated embodiment, the charging dock 1 also includes a power cable 3, which is electrically connected to the rear end of the power terminal 12 and leads out from the insulation housing 13 for electrical connection to the charger 2. The power cable 3 is used to transmit charging current between the charging dock 1 and the charger 2.

As shown in Figures 1 to 7, in the illustrated embodiment, the charging dock 1 also includes a grounding terminal (usually referred to as a grounding protection terminal, i.e. PE terminal) 14, which is set in the insulation housing 13 for mating with a mating grounding terminal (not shown) of the charging gun 4.

As shown in Figures 1 to 7, in the illustrated embodiment, the charging dock further includes a grounding cable 3', which is electrically connected to the rear end of the grounding terminal 14 and leads out from the insulation housing 13 for electrical connection to the charger 2.

As shown in Figures 1 to 7, in the illustrated embodiment, the insulation housing 13 includes a main housing 130 and a rear end cover 131 installed on the rear end of the main housing 130. The power cable 3 and the grounding cable 3' are led out from the rear end cover 131.

As shown in Figures 1 to 7, in the illustrated embodiment, the rear end of power terminal 12 is soldered or crimped to the power cable 3. The rear end of grounding terminal 14 is welded or crimped to the grounding cable 3'.

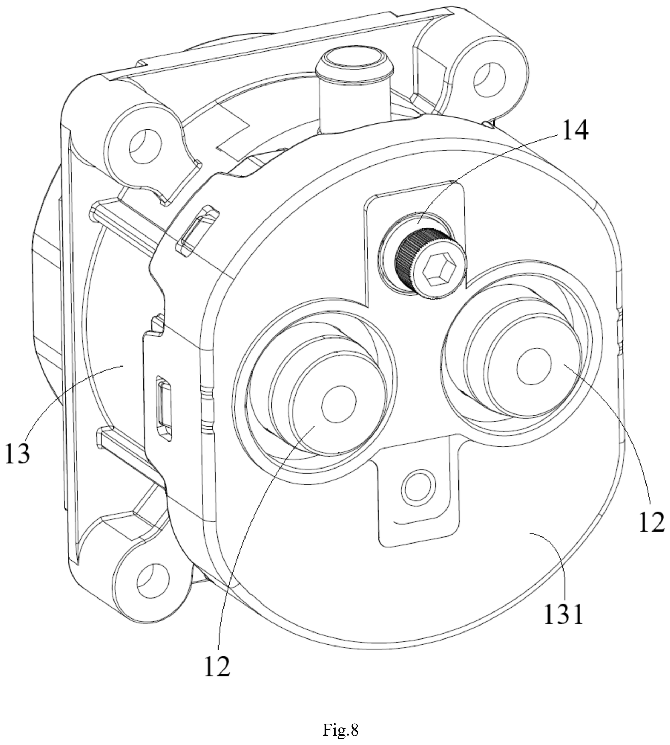

Figure 8 shows an illustrative perspective view of the charging dock 1 according to another exemplary embodiment of the present invention when viewed from the rear.

In the embodiments shown in Figures 1 to 7, the rear ends of the power terminal 12 and the ground terminal 11 are accommodated in the insulation housing 13. In the embodiment shown in Figure 8, the rear ends of power terminal 12 and ground terminal 11 extend from the insulation housing 13.

As shown in Figure 8, in the illustrated embodiment, the rear end of the power terminal 12 extends from the insulation housing 13 for electrical connection to the power cable 3.

As shown in Figure 8, in the illustrated embodiment, the charging dock 1 further comprises a power cable 3, which is electrically connected to the rear end of the power terminal 12. The power cable 3 is used to electrically connect the power terminal 12 of the charging dock 1 to the charger 2, in order to transmit charging current between the charging dock 1 and the charger 2.

As shown in Figure 8, in the illustrated embodiment, the charging dock 1 also includes a grounding terminal 14, which is set in the insulation housing 13 for mating with a mating grounding terminal (not shown) of the charging gun 4. The rear end of the grounding terminal 14 extends from the insulation housing 13 for electrical connection to a grounding cable 3'.

As shown in Figure 8, in the illustrated embodiment, the charging dock 1 also includes a grounding cable 3', which is electrically connected to the rear end of the grounding terminal 14. The grounding cable 3' is used to electrically connect the grounding terminal 14 of the charging dock 1 to the charger 2.

As shown in Figure 8, in the illustrated embodiment, the insulation housing 13 includes a main housing 130 and a rear end cover 131 installed on the rear end of the main housing 130. The power terminal 12 and the ground terminal 14 extend from the rear end cover 131.

As shown in Figure 8, in the illustrated embodiment, a threaded hole suitable for connecting with a bolt is formed in the rear end of the power terminal 12, so that the power terminal 12 can be fastened to one end of the power cable 3 through a bolt. A threaded hole suitable for connecting with a bolt is formed in the rear end of the grounding terminal 14, so that the grounding terminal 14 can be fastened to one end of the grounding cable 3' through a bolt.

As shown in Figures 1 to 8, in the illustrated embodiment, a first through-hole allowing the power terminal 12 to pass through and a second through-hole allowing the ground terminal 14 to pass through are formed in the circuit board.

As shown in Figures 1 to 8, in another exemplary embodiment of the present invention, a charging device is also disclosed. The charging device includes: a charging dock 1 and a charger 2. The charging dock 1 is suitable for docking with a charging gun 4. The charger 2 is used to charge the rechargeable battery and includes a second wireless communication module 20 suitable for wireless communication with the first wireless communication module 10. The power terminal 12 of charging dock 1 is electrically connected to the charger 2 via a power cable 3, which is used to transmit charging current between the charging dock 1 and the charger 2. After the charging dock 1 is docked with the charging gun 4, the first wireless communication module 10 sends a docking completion message to the second wireless communication module 20. After receiving the docking completion message, the charger 2 connects the charging circuit between the charger 2 and the rechargeable battery, so as to charge the rechargeable battery.

As shown in Figures 1 to 8, in the illustrated embodiment, during the docking process between the charging gun 4 and the charging dock 1, the signal terminal 11 is docked with the mating signal terminal 41 after the power terminal 12 is docked with the mating power terminal 12, in order to connect the charging circuit between the charger 2 and the rechargeable battery after the power terminal 12 is docked with the mating power terminal 12. This can prevent arcing between the power terminal 12 and the mating power terminal.

As shown in Figures 1 to 8, in the illustrated embodiment, when the signal terminal 11 is not docked with the mating signal terminal 41, the first wireless communication module 10 determines that the charging gun 4 is not docked with the charging dock 1 and sends an incomplete docking message to the second wireless communication module 20. When the charger 2 receives an incomplete docking message, the charger 2 cuts off the charging circuit between the charger 2 and the rechargeable battery or keeps the charging circuit in a disconnected state.

As shown in Figures 1 to 8, in the illustrated embodiment, during the process of pulling out the charging gun 4 from the charging dock 1, the signal terminal 11 is separated from the mating signal terminal 41 before the power terminal 12 is separated from the mating power terminal 12, in order to cut off the charging circuit between the charger 2 and the rechargeable battery before the power terminal 12 is separated from the mating power terminal 12. This can prevent arcing between the power terminal 12 and the mating power terminal.

As shown in Figures 1 to 8, in the illustrated embodiment, the charging dock 1 includes multiple power terminals 12, which are electrically connected to the charger 2 via multiple power cables 3.

As shown in Figures 1 to 8, in the illustrated embodiment, the charging device can be a vehicle charging device used to charge the vehicle's rechargeable battery.

As shown in Figures 1 to 8, in the illustrated embodiment, the first wireless communication module 10 and the second wireless communication module 20 can be Bluetooth modules, Wi Fi modules, Zigbee modules, or RFID modules.

As shown in Figures 1 to 8, in the illustrated embodiment, there is no physical signal connection cable between the charging dock 1 and the charger 2, and all signal transmission between the charging dock 1 and the charger 2 is achieved through wireless communication between the first wireless communication module 10 and the second wireless communication module 20.

As shown in Figures 1 to 8, in another exemplary embodiment of the present invention, a charging device is also disclosed. The charging device includes: a charging dock 1, a charger 2, and a power cable 3. The charging dock 1 is suitable for docking with a charging gun 4 and includes a first wireless communication module 10 adapted to detect whether the charging dock 1 has been docked with the charging gun 4. The charger 2 is used to charge a rechargeable battery (not shown) and includes a second wireless communication module 20 suitable for wireless communication with the first wireless communication module 10. The power cable 3 is connected between the charging dock 1 and the charger 2, used to transmit charging current between the charging dock 1 and the charger 2. After the charging dock 1 is docked with the charging gun 4, the first wireless communication module 10 sends a docking completion message to the second wireless communication module 20. After receiving the docking completion message, the charger 2 connects the charging circuit between the charger 2 and the rechargeable battery to charge the rechargeable battery.

As shown in Figures 1 to 8, in the illustrated embodiment, there is no physical signal connection cable between the charging dock 1 and the charger 2, and all signal transmission between the charging dock 1 and the charger 2 is achieved through wireless communication between the first wireless communication module 10 and the second wireless communication module 20. Therefore, the present invention eliminates the existing physical form of signal connection cables, which not only simplifies the signal circuit and assembly process, but also reduces the occupied space of the charging device and lowers the difficulty of wiring.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A charging dock, comprising:
an insulation housing (13);
a power terminal (12) which is provided in the insulation housing (13) for mating with a mating power terminal (42) of a charging gun (4);
a signal terminal (11) which is provided in the insulation housing (13) for mating with a mating signal terminal (41) of the charging gun (4); and
a circuit board (100) which is provided in the insulation housing (13) and electrically connected to the signal terminal (11),
wherein the circuit board (100) has a first wireless communication module (10) for wireless communication with a second wireless communication module (20) of a charger (2),
wherein after the charging dock (1) is docked with the charging gun (4), the first wireless communication module (10) sends a docking completion message to the second wireless communication module (20).

2. The charging dock according to claim 1, further comprising:
a power cable (3) which is electrically connected to the rear end of the power terminal (12) and led out from the insulation housing (13) for electrical connection to the charger (2),
wherein the power cable (3) is used to transmit charging current between the charging dock (1) and the charger (2).

3. The charging dock according to claim 2, further comprising:
a grounding terminal (14) which is provided in the insulation housing (13) for mating with a mating grounding terminal of the charging gun.

4. The charging dock according to claim 3, further comprising:
a grounding cable (3') which is electrically connected to the rear end of the grounding terminal (14) and led out from the insulation housing (13) for electrical connection to the charger (2).

5. The charging dock according to claim 4,
wherein the insulation housing (13) comprises a main housing (130) and a rear end cover (131) installed on the rear end of the main housing (130), and the power cable (3) and the grounding cable (3') are led out from the rear end cover (131),
and/or,
wherein the rear end of the power terminal (12) is welded or crimped onto the power cable (3); and/or
wherein the rear end of the grounding terminal (14) is welded or crimped to the grounding cable (3').

6. The charging dock according to claim 1,
wherein the rear end of the power terminal (12) extends from the insulation housing (13) for electrical connection to a power cable (3).

7. The charging dock according to claim 6, further comprising:
a power cable (3) electrically connected to the rear end of the power terminal (12),
wherein the power cable (3) is used to electrically connect the power terminal (12) of the charging dock (1) to the charger (2) to transmit charging current between the charging dock (1) and the charger (2).

8. The charging dock according to claim 6, further comprising:
a grounding terminal (14) which is provided in the insulation housing (13) for mating with a mating grounding terminal of the charging gun (4),
wherein the rear end of the grounding terminal (14) extends from the insulation housing (13) for electrical connection to a grounding cable (3').

9. The charging dock according to claim 8, further comprising:
a grounding cable (3') electrically connected to the rear end of the grounding terminal (14),
wherein the grounding cable (3') is used to electrically connect the grounding terminal (14) of the charging dock (1) to the charger (2),
and/or,
wherein the insulation housing (13) comprises a main housing (130) and a rear end cover (131) installed on the rear end of the main housing (130), and the power terminal (12) and the grounding terminal (14) extend from the rear end cover (131),
and/or,
wherein a threaded hole suitable for connecting with a bolt is formed in the rear end of the power terminal (12), so that the power terminal (12) can be fastened to one end of the power cable (3) through a bolt; and/or
wherein a threaded hole suitable for connecting with a bolt is formed in the rear end of the grounding terminal (14), so that the grounding terminal (14) can be fastened to one end of the grounding cable (3') through a bolt.

10. The charging dock according to claim 3 or 8,
wherein a first through-hole allowing the power terminal (12) to pass through and a second through-hole allowing the ground terminal (14) to pass through are formed in the circuit board.

11. A charging device, comprising:
the charging dock (1) according to any one of claims 1-10, suitable for docking with a charging gun (4); and
a charger (2) for charging a rechargeable battery and comprising a second wireless communication module (20) adapted for wireless communication with the first wireless communication module (10),
wherein the power terminal (12) of the charging dock (1) is electrically connected to the charger (2) via a power cable (3), which is used to transmit charging current between the charging dock (1) and the charger (2),
wherein after the charging dock (1) is docked with the charging gun (4), the first wireless communication module (10) sends a docking completion message to the second wireless communication module (20), and the charger (2) connects a charging circuit between the charger (2) and the rechargeable battery after receiving the docking completion message, so as to charge the rechargeable battery.

12. The charging device according to claim 11,
wherein during the process of docking the charging gun (4) with the charging dock (1), the signal terminal (11) is docked with the mating signal terminal (41) after the power terminal (12) is docked with the mating power terminal (12), in order to connect the charging circuit between the charger (2) and the rechargeable battery after the power terminal (12) is docked with the mating power terminal (12),
wherein optionally when the signal terminal (11) is not docked with the mating signal terminal (41), the first wireless communication module (10) determines that the charging gun (4) is not docked with the charging dock (1) and sends an incomplete docking message to the second wireless communication module (20);
wherein optionally when the charger (2) receives the incomplete docking message, the charger (2) cuts off the charging circuit between the charger (2) and the rechargeable battery or keeps the charging circuit in a disconnected state,
wherein optionally during the process of pulling out the charging gun (4) from the charging dock (1), the signal terminal (11) is separated from the mating signal terminal (41) before the power terminal (12) is separated from the mating power terminal (12), in order to cut off the charging circuit between the charger (2) and the rechargeable battery before the power terminal (12) is separated from the mating power terminal (12).

13. The charging device according to claim 11,
wherein the charging dock (1) comprises multiple power terminals (12), which are respectively electrically connected to the charger (2) via multiple power cables (3),
and/or,
wherein the charging device is a vehicle mounted charging device used for charging a vehicle mounted rechargeable battery,
and/or,
wherein the first wireless communication module (10) and the second wireless communication module (20) are Bluetooth modules, Wi-Fi modules, Zigbee modules, or RFID modules.

14. The charging device according to any one of claims 11-13,
wherein there is no physical signal connection cable between the charging dock (1) and the charger (2), and all signal transmission between the charging dock (1) and the charger (2) is achieved through wireless communication between the first wireless communication module (10) and the second wireless communication module (20).

15. A charging device, comprising:
a charging dock (1) adapted to dock with a charging gun (4) and comprising a first wireless communication module (10) adapted to detect whether the charging dock (1) has docked with the charging gun (4);
a charger (2) for charging a rechargeable battery and comprising a second wireless communication module (20) adapted for wireless communication with the first wireless communication module (10); and
a power cable (3) which is connected between the charging dock (1) and the charger (2) for transmitting charging current between the charging dock (1) and the charger (2),
wherein after the charging dock (1) is docked with the charging gun (4), the first wireless communication module (10) sends a docking completion message to the second wireless communication module (20), and the charger (2) connects a charging circuit between the charger (2) and the rechargeable battery after receiving the docking completion message, so as to charge the rechargeable battery.
